# DEMANDE DE BREVET EUROPEEN

(11) **EP 0 918 240 A1**
(43) Date de publication de la demande: **26.05.1999**
(21) Numéro de dépôt: 98402895.1
(22) Date de dépôt: 20.11.1998
(51) Int. Cl.: G02B 23/12, G02B 27/30, G02B 27/52, H04N 5/33

(54) **Harmonisation des axes d'entrée et de sortie d'une lunette infrarouge**

(30) Priorité: 21.11.1997 FR 9714646
(71) Demandeur: THOMSON-CSF, 75008 Paris (FR)
(72) Inventeur: Fouilloy, Jean-Pierre, Thompson-CSF P.I.D.P.et Con, 94117 Arcueil Cedex (FR); Seugnet, Patrick, Thompson-CSF P.I.D.P.et Con, 94117 Arcueil Cedex (FR)
(74) Mandataire: Albert, Claude

(57) **Abrégé**

L'invention se rapporte à une lunette infrarouge comportant des moyens d'harmonisation de ses axes d'entrée et de sortie. La lunette infrarouge comporte :
- une caméra infrarouge (1) permettant d'observer une scène infrarouge et délivrant un signal vidéo représentatif de la scène infrarouge, caméra infrarouge (1) dont l'axe de visée constitue l'axe d'entrée (3),
- un écran de visualisation (5) recevant le signal vidéo et affichant l'image correspondante dans le spectre de fréquence visible,
- un collimateur (6) bispectral, visible et infrarouge, collimatant à l'infini l'image affichée sur l'écran de visualisation (5), collimateur (6) dont l'axe optique constitue l'axe de sortie (7),
- une source infrarouge (8) positionnée de façon prédéfinie par rapport à l'axe de sortie (7) et disposée de sorte que son rayonnement soit collimaté à l'infini par le collimateur (6),
- des moyens de renvoi (10) du rayonnement issu de la source infrarouge (8) en sortie du collimateur (6), vers la caméra infrarouge (1), moyens permettant la formation sur l'écran de visualisation (5) d'une image de la source infrarouge (8),
- des moyens de mesure du décalage entre la position prédéfinie de la source infrarouge (8) et l'image de la source infrarouge (8) sur l'écran de visualisation (5),
- des moyens de réglage de la lunette pour réduire le décalage.

## Description

L'invention se rapporte à une lunette infrarouge comportant des moyens d'harmonisation de ses axes d'entrée et de sortie. On rappelle qu'une lunette est un dispositif permettant d'observer une scène éloignée. La lunette fournit une image de la scène à l'infini. Par analogie, une lunette infrarouge permet l'observation d'une scène infrarouge et en fournit une image visible à l'infini.

Beaucoup de système de visée tels que par exemple un viseur de canon, un télémètre laser ou un poste de tir de missile utilisent une lunette fonctionnant dans le spectre de lumière visible. Cette lunette, dite de jour, définit un axe grâce à un réticule. Il peut être nécessaire de faire fonctionner ces systèmes de visée dans un spectre de fréquence autre que le visible comme par exemple l'infrarouge. Une bande de fréquence habituelle de l'infrarouge est comprise environ entre trois et cinq µm. Une autre bande habituellement utilisée dans l'infrarouge est comprise environ entre huit et douze µm. L'invention n'est bien entendu pas limitée à ces bandes de fréquences. Pour faire fonctionner ces systèmes de visée à de telles fréquences, on utilise avantageusement une lunette infrarouge à grossissement unité placée devant la lunette de jour.

Des réalisations de ce type de lunette existent mais présente néanmoins une difficulté particulière. Il est en effet important d'harmoniser les axes optiques d'entrée et de sortie de la lunette infrarouge afin que la même scène soit observée avec ou sans la lunette infrarouge par l'observateur. En particulier, l'axe de visée défini par le réticule de la lunette de jour doit être conservé lorsque l'on place devant cette lunette de jour, une lunette infrarouge. Dans le cas particulier d'une lunette infrarouge placée devant la lunette de jour, les axes d'entrée et de sortie de la lunette infrarouge doivent être parallèles. Harmoniser les axes d'entrée et de sortie d'une telle lunette revient à réduire les éventuels défauts de parallélisme de ces axes entre eux pour, idéalement, les annuler et au moins les ramener dans des tolérances acceptables. L'invention n'est bien entendue pas limitée à une lunette comportant des axes parallèles. On peut tout aussi bien la mettre en oeuvre pour une lunette dont les axes d'entrée et de sortie ne sont pas parallèles. Harmoniser les axes revient alors à limiter leurs défauts de position relative.

L'exemple d'une lunette infrarouge à grossissement unité a été choisi pour mieux comprendre le problème posé mais il est bien entendu que l'invention ne se limite pas à ce type de lunette. L'invention peut être mise en oeuvre pour tout type de lunette quel que soit son grossissement.

L'invention a pour but d'harmoniser les axes d'entrée et de sortie de la lunette avec une précision compatible à l'application envisagée qui peut par exemple être inférieure à 100 µrd.

Pour atteindre ce but, l'invention a pour objet une lunette infrarouge, caractérisée en ce qu'elle comporte :
- une caméra infrarouge permettant d'observer une scène infrarouge et délivrant un signal vidéo représentatif de la scène infrarouge, caméra infrarouge dont l'axe de visée constitue l'axe d'entrée ,
- un écran de visualisation recevant le signal vidéo et affichant l'image correspondante dans le spectre de fréquence visible,
- un collimateur bispectral, visible et infrarouge, collimatant à l'infini l'image affichée sur l'écran de visualisation, collimateur dont l'axe optique constitue l'axe de sortie,
- une source infrarouge positionné de façon prédéfinie par rapport à l'axe de sortie et disposée de sorte que son rayonnement soit collimaté à l'infini par le collimateur,
- des moyens de renvoi du rayonnement issu de la source infrarouge en sortie du collimateur, vers la caméra infrarouge, moyens permettant la formation sur l'écran de visualisation d'une image de la source infrarouge,
- des moyens de mesure du décalage entre la position prédéfinie de la source infrarouge et l'image de la source infrarouge sur l'écran de visualisation,
- des moyens de réglage de la lunette pour réduire le décalage.

Un avantage lié à l'invention est de permettre une mise en oeuvre simple de l'harmonisation des axes. Cette mise en oeuvre peut être réalisée en opération. On n'est pas obligé de placer la lunette sur un banc de mesure en usine pour refaire l'harmonisation.

L'invention sera mieux comprise et d'autres avantages apparaîtront avec la description ci-après et le dessin joint où :
- la figure 1 représente schématiquement un mode de réalisation conforme à l'invention d'une lunette infrarouge comportant des moyens d'harmonisation de ses axes d'entrée et de sortie ;
- la figure 2 représente schématiquement un moyen pour disposer la source infrarouge de la figure précédente de telle sorte que son rayonnement soit collimaté à l'infini, l'écran de visualisation se trouvant déjà sur l'axe du collimateur ;
- la figure 3 représente schématiquement un autre moyen pour disposer la source infrarouge de telle sorte que son rayonnement soit collimaté à l'infini, la source infrarouge se trouvant déjà sur l'axe du collimateur.

Par souci de simplicité dans les différentes figures, les mêmes objets porteront les mêmes repères topologiques.

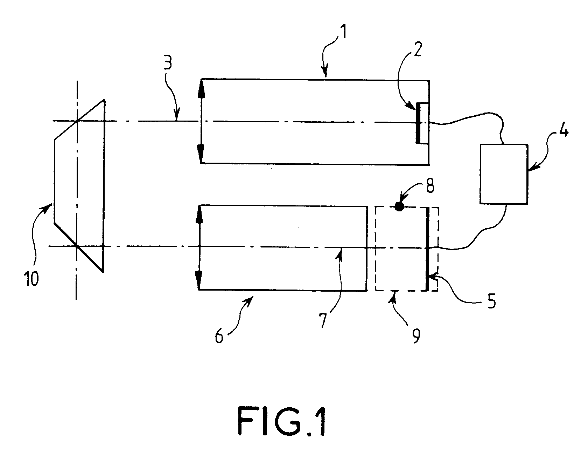

La figure 1 illustre le principe général d'harmonisation des axes d'entrée 3 et de sortie 7 d'une lunette infrarouge de grossissement unité, ces deux axes étant parallèles. La lunette infrarouge comporte une caméra infrarouge 1 dont l'axe de visée constitue l'axe d'entrée 3, un écran de visualisation 5 et un collimateur 6 dont l'axe optique constitue l'axe de sortie 7. Un rayon lumineux sortant de la lunette suivant l'axe de sortie 7 a une direction opposée à la direction d'un rayon entrant suivant l'axe d'entrée 3. Il est bien entendu que l'invention ne se limite pas à cette configuration et qu'elle peut être mise en oeuvre dans toute lunette quelque soit la position relative des axes d'entrée et de sortie. Néanmoins, ce type de configuration est avantageusement employé en combinaison avec une lunette de jour non représentée sur cette figure. Les deux lunettes, de jour et infrarouge, sont positionnées de telle sorte que leurs axes d'entrées soient sensiblement parallèles et orientés dans la même direction. Pour insérer la lunette infrarouge dans le chemin optique de la lunette de jour, on interpose entre l'axe de sortie 7 de la lunette infrarouge et l'axe d'entrée de la lunette de jour un moyen de renvoi de l'image comme par exemple un ensemble de miroirs plans en forme de trièdre trirectangle ouvert. Ce moyen de renvoi connu présente l'avantage de renvoyer parallèlement à lui même tout rayon lumineux entrant quelle que soit son incidence.

La caméra 1 comporte un détecteur 2 dont le rôle est de transformer un rayonnement infrarouge entrant dans la caméra en un signal électrique vidéo. Sur la figure 1, la caméra 1 est orientée de telle sorte que l'axe d'entrée 3 soit horizontal et qu'un rayonnement infrarouge puisse entrer dans la caméra 1 de la gauche vers la droite. Le signal vidéo issu du détecteur 2 est transmis à un dispositif électronique 4 de traitement qui le transforme en un signal visualisable sur l'écran de visualisation 5. L'écran de visualisation 5 affiche une image dans le spectre visible ; cette image représente une scène infrarouge observée par la caméra 1. L'écran de visualisation 5 peut par exemple être un écran à cristaux liquides ou un écran à diodes électroluminescentes. L'image affichée sur l'écran de visualisation 5 est collimatée à l'infini au moyen d'un collimateur 6 dans une direction opposée à la direction du rayonnement infrarouge entrant dans la caméra 1.

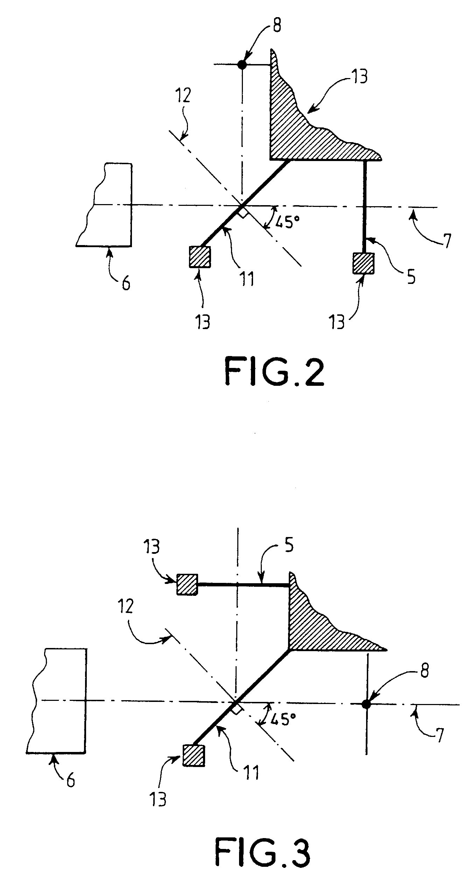

Le collimateur 6 est bispectral. Il est utilisable à la fois dans le spectre visible et dans le spectre infrarouge. On comprend que le collimateur 6 soit utilisable dans le spectre visible puisqu'il doit collimater à l'infini l'image, dans le spectre visible, affichée sur l'écran de visualisation 5. L'utilisation du collimateur dans le spectre infrarouge est rendue nécessaire par le fait que le dispositif objet de la présente invention comporte une source infrarouge 8 de préférence sensiblement ponctuelle. Cette source infrarouge 8 est positionnée de façon prédéfinie par rapport à l'axe de sortie 7 du collimateur 6. De plus, la source infrarouge 8 est disposée de telle sorte que son rayonnement soit collimaté à l'infini par le collimateur 6. Avantageusement, la source infrarouge se trouve dans un espace situé entre l'écran de visualisation 5 et le collimateur 6. Deux exemples de moyens 9 pour disposer la source infrarouge 8 seront décrit ultérieurement à l'aide des figures 2 et 3.

La lunette comporte en outre des moyens de renvoi 10 du rayonnement issu de la source infrarouge 8, en sortie du collimateur 6 vers la caméra infrarouge 1. Ces moyens de renvoi 10 sont de préférence amovibles ; ils ne sont utiles que dans la phase d'harmonisation des axes optiques d'entrée 3 et de sortie 7 de la lunette infrarouge. Ces moyens de renvoi 10 sont par exemple un ensemble connu de miroirs plans en forme de trièdre trirectangle ouvert.

Le rayonnement issu de la source infrarouge 8 ainsi réfléchi forme à travers la caméra 1, son détecteur 2 et le dispositif électronique 4 une image sur l'écran de visualisation 5. Pour harmoniser les axes d'entrée et de sortie de la lunette infrarouge, on mesure le décalage entre la position prédéfinie de la source infrarouge 8 et son image sur l'écran de visualisation 5. Ensuite on règle la lunette pour idéalement annuler le décalage et au moins le ramener dans des tolérances acceptables, par exemple en agissant mécaniquement sur un ou plusieurs composants optiques de la lunette infrarouge ou sur la position de l'écran de visualisation 5. On peut aussi par exemple agir sur le dispositif électronique 4 pour réduire l'excentre ment. Une fois l'opération d'harmonisation des axes d'entrée 3 et de sortie 7 terminée, on éteint la source infrarouge 8 et on peut ôter les moyens de renvoi 10 de l'image s'ils sont gênants pour l'utilisation de la lunette infrarouge.

On a vu précédemment que la source infrarouge 8 devait être positionnée de façon prédéfinie par rapport à l'axe de sortie 7 du collimateur 6. Si la lunette a un grossissement unité, la position de la source infrarouge 8, par rapport à l'axe de sortie 7 est indifférente. En effet, le décalage éventuel entre la position prédéfinie de la source infrarouge 8 et son image sur l'écran de visualisation 5 est indépendante de la position de la source infrarouge 8 par rapport à l'axe de sortie 7 du collimateur. Il est néanmoins avantageux de positionner la source infrarouge 8 au voisinage de l'axe de sortie 7 afin d'éviter de cumuler le défaut d'harmonisation avec d'autres défauts, comme par exemple les distorsions géométriques, les abérations hors d'axe ou le vignettage, qui peuvent apparaître lorsqu'on s'éloigne de l'axe de sortie 7. Si par contre, le grossissement de la lunette est différent de 1, il est avantageux que la source infrarouge 8 soit positionnée sur l'axe de sortie 7. En effet, dans ce cas, le décalage n'est pas seulement fonction d'un défaut d'harmonisation des axes 3 et 7, il est aussi fonction de la position de la source infrarouge 8 par rapport à l'axe de sortie 7.

La figure 2 décrit un premier exemple de moyens pour disposer la source infrarouge 8 de sorte que son rayonnement soit collimaté à l'infini.

L'axe 7 du collimateur 6 est représenté horizontalement. L'écran de visualisation 5 est perpendiculaire à l'axe 7. Un miroir 11 dichroïque plan est positionné entre l'écran de visualisation et le collimateur 6. Une droite 12 normale à ce miroir 11 est sensiblement orientée à 45° par rapport à l'axe 7. Le miroir est transparent au rayonnement lumineux du spectre de fréquence visible et il est réfléchissant au rayonnement lumineux du spectre infrarouge afin de pouvoir réfléchir un rayon lumineux provenant de la source infrarouge 8. L'orientation à 45° du miroir 11 n'est bien entendu donnée qu'à titre d'exemple ; d'autres orientations sont possibles pourvu que la source infrarouge 8 soit positionnée de telle sorte qu'elle émette un rayonnement infrarouge qui, après réflexion sur le miroir 11, soit collimaté suivant l'axe 7 de l'objectif de sortie 6. On a vu précédemment que le collimateur 6 collimate à l'infini l'image affichée sur l'écran de visualisation 5. On dispose la source infrarouge 8 pour que le rayonnement infrarouge qu'elle émet soit collimaté aussi à l'infini au travers du collimateur 6.

Pour que le collimateur 6 collimate à l'infini l'image affichée sur l'écran de visualisation 5 et le rayonnement émis par la source infrarouge 8, il faut que l'écran de visualisation 5 et la source infrarouge 8 se trouvent au voisinage du plan focal du collimateur 6, plan focal renvoyé par le miroir 11 pour la source infrarouge 8. Il est possible que les distances focales du collimateur 6 dans le spectre visible et dans le spectre infrarouge soient différentes. Un avantage lié à la structure décrite en figure 2 est qu'il est possible de disposer la source infrarouge 8 le plus précisément possible dans le plan focal infrarouge. Ceci serait difficile sans miroir 11 dans le cas où la distance focal infrarouge serait plus grande que la distance focale visible. Il faudrait en effet disposer la source infrarouge 8 derrière l'écran de visualisation 5.

Une structure mécanique 13 maintient en place l'écran de visualisation 5, la source infrarouge 8 et le miroir 11. Cette structure mécanique 13 est avantageusement la plus ramassée possible et réalisée dans un matériau judicieusement choisi pour que la position relative des différents éléments qu'elle soutient entre eux et dans une moindre mesure par rapport à l'objectif de sortie 6 soit la plus stable possible en fonction des conditions d'environnement de la lunette.

Un exemple de réalisation de la source infrarouge 8 peut comporter un trou de 20 µm de diamètre dans une plaque derrière laquelle on place une lampe halogène.

La figure 3 décrit un second exemple de moyens pour disposer la source infrarouge 8 de sorte que son rayonnement soit collimaté à l'infini. Le principe est semblable à celui décrit à la figure 2 mais cette fois, le miroir 11 dichroïque est transparent au rayonnement du spectre infrarouge et est réfléchissant au rayonnement du spectre visible. Cette structure du miroir 11 entraîne par rapport à la figure 2 une inversion de la source infrarouge 8 et de l'écran de visualisation 5. Cette variante présente tous les avantages décrits précédemment, mais on peut préférer cette variante pour améliorer l'accessibilité de la source infrarouge 8 dans la structure mécanique de la lunette.

Un autre avantage lié à l'invention est que la mesure du décalage se fait directement par le dispositif électronique 4 en comparant la position prédédéfinie de la source infrarouge 8 par rapport à l'axe de sortie 7 et la position de l'image de la source infrarouge 8 par la caméra 1 sur l'écran de visualisation 5. On est ainsi indépendant de la technologie choisie pour l'écran de visualisation 5. En effet certains écrans, comme par exemple un écran à cristaux liquides, ne rayonnent pas selon un lobe symétrique par rapport à l'axe 7. Positionner un détecteur, par exemple à quatre quadrants, pour mesurer le décalage au voisinage de l'écran de visualisation 5 risquerait de donner une information erronée de la position réelle de l'image de la source infrarouge 8 sur l'écran de visualisation 5 par la caméra 1.

Afin de déterminer la position prédéfinie de la source infrarouge 8 par rapport à l'axe de sortie 7, plusieurs méthodes existent. Un exemple de méthode consiste à observer la lunette à travers le collimateur 6 soit directement, soit en remplaçant le collimateur 6 par le tube d'un microscope. On allume la source infrarouge 8 et un point de l'écran de visualisation 5 situé sur l'axe de sortie 7. Ce point est allumé au moyen du dispositif électronique 4. En observant la lunette, il apparaît deux images, celle de la source infrarouge 8 et celle du point allumé. Puis on fait coïncider ces deux images par exemple en déplaçant la source infrarouge. Cette méthode assure que la source infrarouge 8 est bien située sur l'axe de sortie 7. Il suffit ensuite d'utiliser l'invention pour harmoniser les axes d'entrée 3 et de sortie 7 de la lunette.

Une autre méthode pour déterminer la position prédéfinie de la source infrarouge 8, consiste à harmoniser la lunette en usine sur un banc de mesure. Ensuite on allume la source infrarouge 8 et on positionne les moyens de renvoi 10, s'ils sont amovibles, de façon à ce qu'ils réfléchissent le rayonnement issu de la source infrarouge 8 vers la caméra 1. Le rayonnement induit une image sur l'écran de visualisation 5. Cette image est normalement sensiblement ponctuelle. Si l'image n'est pas sensiblement ponctuelle, par exemple, parce que la diffraction se fait sentir sur la pupille définie par le moyen de renvoi 10 de l'image, on considère le centre de gravité de l'image, centre de gravité qui peut être déterminé par le dispositif électronique 4. Puis on mémorise les coordonnées de cette image dans le dispositif électronique 4. Tant que la lunette est harmonisée, l'image de la source infrarouge 8 sur l'écran de visualisation 5 via le collimateur 6, les moyens de renvoi 10 et la caméra 1, coïncide avec la position mémorisée initialement dans le dispositif électronique 4. Plus tard, lorsque l'on voudra harmoniser de nouveau la lunette, par exemple en opération, on allumera la source infrarouge 8 et on positionnera les moyens de renvoi 10 et on notera une nouvelle position de la source infrarouge 8 sur l'écran de visualisation 5. Si cette nouvelle position coïncide avec la position initialement mémorisée, la lunette est alors correctement harmonisée. Si, au contraire, on mesure un décalage entre la nouvelle position et la position initialement mesurée, on harmonisera la lunette en annulant idéalement le décalage ou au moins en le réduisant dans des tolérances acceptables.

## Revendications

1. Lunette infrarouge, caractérisée en ce qu'elle comporte :
- une caméra infrarouge (1) permettant d'observer une scène infrarouge et délivrant un signal vidéo représentatif de la scène infrarouge, caméra infrarouge (1) dont l'axe de visée constitue l'axe d'entrée (3),
- un écran de visualisation (5) recevant le signal vidéo et affichant l'image correspondante dans le spectre de fréquence visible,
- un collimateur (6) bispectral, visible et infrarouge, collimatant à l'infini l'image affichée sur l'écran de visualisation (5), collimateur (6) dont l'axe optique constitue l'axe de sortie (7),
- une source infrarouge (8) positionnée de façon prédéfinie par rapport à l'axe de sortie (7) et disposée de sorte que son rayonnement soit collimaté à l'infini par le collimateur (6),
- des moyens de renvoi (10) du rayonnement issu de la source infrarouge (8) en sortie du collimateur (6), vers la caméra infrarouge (1), moyens permettant la formation sur l'écran de visualisation (5) d'une image de la source infrarouge (8),
- des moyens de mesure du décalage entre la position prédéfinie de la source infrarouge (8) et l'image de la source infrarouge (8) sur l'écran de visualisation (5),
- des moyens de réglage de la lunette pour réduire le décalage.

2. Lunette selon la revendication 1, caractérisée en ce qu' elle comporte en outre un miroir dichroïque (11) placé sur l'axe de sortie (7) entre l'écran de visualisation (5) et le collimateur (6), renvoyant le rayonnement de la source infrarouge (8) vers le collimateur (6).

3. Lunette selon la revendication 2, caractérisée en ce que le miroir dichroïque (11) est transparent au rayonnement visible et réfléchit le rayonnement infrarouge.

4. Lunette selon la revendication 2, caractérisée en ce que le miroir dichroïque (11) est transparent au rayonnement infrarouge et réfléchit le rayonnement visible.

5. Lunette selon l'une des revendications précédentes, caractérisée en ce que la source infrarouge (8) est positionnée sensiblement sur l'axe de sortie (7) ou le renvoi de l'axe de sortie (7) par le miroir (11).

6. Lunette selon l'une des revendications précédentes, caractérisée en ce que la lunette est sensiblement à grossissement unité.

7. Lunette selon l'une des revendications précédentes, caractérisée en ce que les axes d'entrée (3) et de sortie (7) sont sensiblement parallèles.

8. Lunette selon l'une des revendications précédentes, caractérisée en ce que les moyens de renvoi (10) comportent un ensemble de miroirs plans en forme de trièdre trirectangle ouvert.

9. Lunette selon l'une des revendications précédentes, caractérisée en ce que la source infrarouge est sensiblement ponctuelle.

10. Lunette selon l'une des revendications précédentes caractérisée en ce que les moyens de mesure déterminent le centre de gravité de l'image de la source infrarouge (8) sur l'écran de visualisation (5).
